# EUROPÄISCHE PATENTANMELDUNG

(11) **EP 4 273 432 A1**
(43) Veröffentlichungstag der Anmeldung: **08.11.2023**
(21) Anmeldenummer: 23169354.0
(22) Anmeldetag: 24.04.2023
(51) Int. Cl.: F16L 13/14

(54) **VERFAHREN ZUR VERBINDUNG ZWEIER ENDBEREICHE EINER LEITUNG EINES KÄLTEKREISES, LEITUNGSVERBINDUNG FÜR EINEN KÄLTEKREIS EINES KLIMAGERÄTES UND KLIMAGERÄT**

(30) Priorität: 02.05.2022 DE 102022110669
(71) Anmelder: Vaillant GmbH, 42859 Remscheid NRW (DE)
(72) Erfinder: Brinkbäumer, Thomas, 44628 Herne (DE); Angulo, Luis-Maria, 48192 Gordexola (ES); Schmitz, Annette, 53604 Bad Honnef (DE); Froese, Norman, 51919 Odenthal (DE); Sander, Claus, 32479 Hille (DE)
(74) Vertreter: Popp, Carsten

(57) **Zusammenfassung**

Vorgeschlagen wird ein Verfahren zur Verbindung eines ersten Endbereiches (2) und eines zweiten Endbereiches (11) einer Leitung (14) eines Kältekreises eines Klimagerätes, umfassend zumindest die folgenden Schritte:
a) Umformen des ersten Endbereiches (2) der Leitung (14) zu einem inneren Verbindungsbereich (4) umfassend einen äußeren Sicherungsbereich (8),
b) Umformen des zweiten Endbereiches (11) der Leitung (14) zu einem äußeren Verbindungsbereich (3) umfassend einen inneren Sicherungsbereich (9),
c) Einführen des inneren Verbindungsbereiches (4) in den äußeren Verbindungsbereich (3),
d) Formschlüssiges Verbinden des inneren Sicherungsbereiches (8) des ersten Endbereichs (2) und des äußeren Sicherungsbereiches (9) des zweiten Endbereichs (11), so dass eine Bewegung des ersten Endbereiches (2) relativ zu dem zweiten Endbereich (11) in axialer Richtung (10) blockiert ist. Das Verfahren und die Leitungsverbindung (1) tragen zumindest dazu bei, eine standfeste und sichere Leitungsverbindung (1) für einen Kältekreis eines Klimagerätes anzugeben, die einfach und ohne zusätzliche Bauelemente mittels Umformverfahren herstellbar ist.

## Beschreibung

Die Erfindung betrifft ein Verfahren zur Verbindung zweier Endbereiche einer Leitung eines Kältekreises eines Klimagerätes, eine Leitungsverbindung für einen Kältekreis eines Klimagerätes und ein Klimagerät.

Zumeist wird in Kältekreisen ein Kältemittel zirkuliert, das in der Regel einen Phasenwechsel zum Wärmetransport durchläuft. Derartige Kältekreise finden unter anderem bei Klimageräten wie Klimaanlagen oder Wärmepumpenanlagen Einsatz. Im Kältekreis können dabei in Abhängigkeit von dem verwendeten Kältemittel erhebliche Druck- und Temperaturschwankungen auftreten.

Die verwendeten Kältemittel weisen häufig ein erhebliches Klimaschädigungspotential auf, so dass ein Austreten von Kältemittel aus dem Kältekreis, neben einem Ausfall des Klimagerätes, auch weitere nicht unbeachtliche Schäden verursachen kann. Neuere Kältemittel, beispielsweise Methan, weisen zwar ein deutlich geringeres Klimaschädigungspotential auf, jedoch geht von Methan aufgrund der Brennbarkeit bei einem Austreten aus dem Kältekreis eine erhebliche Explosionsgefahr aus.

Zudem gewinnen Wärmepumpen zur Wärmeversorgung von Gebäuden zunehmend an Bedeutung. Diese können einen Außenteil aufweisen, das eine Wärmeaufnahme aus einem Umgebungsmedium (Grundwasser, Boden, Luft) gewährleistet, und einen Innenteil, der die Wärme auf einen Heizkreislauf oder eine Warmwasserbereitstellung übertragen kann. In der Regel sind hierbei Innenteil und Außenteil durch einen Kältekreis verbunden, womit der Kältemittelkreis sowohl innerhalb als auch außerhalb eines Gebäudes angeordnet ist. Für die Installation des Kältekreises kommen Leitungsverbindungen zum Einsatz, die einzelne Leitungsabschnitte miteinander verbinden. Um ein Austreten von Kältemittel zu verhindern, müssen diese Leitungsverbindungen den hohen Druck- und Temperaturschwankungen im Kältemittelkreis standhalten und ein Austreten von Kältemittel wirkungsvoll verhindern.

Hierzu sind verschiedene Leitungsverbindungen bekannt. Eingesetzt werden beispielsweise sogenannte Press-Fittings, die eine innenliegend montierte Rundschnurdichtung umfassen können und formschlüssig verpresst werden. Problematisch kann dabei eine Positionsveränderung der Rundschnurdichtung beim Herstellen der Leitungsverbindung nicht festgestellt werden, welche einer dauerhaften Dichtwirkung entgegenstehen könnte.

In der JP 2011-7221 A wird eine Leitungsverbindung vorgestellt, bei der ein Bereich mit außenliegenden Dichtungen unter Verwendung eines Federringes und eines Positionierungsringes in Verbindung gebracht werden kann. Hierzu sind jedoch mehrere zusätzliche Bauteile notwendig, wobei die herzustellende lösbare Verbindung zudem in bestimmten Regionen für Kältekreise im Innenraum (gesetzlich) nicht zugelassen sein kann.

Auch die EP 1 479 960 A1 zeigt eine Steckverbindung zwischen einem gewellten Metallschlauch und einem Anschlussstück. Dabei ist in einem Wellental des Schlauches eine außenliegende Ringdichtung angeordnet. Eine Sicherungsklammer kann die Welle und einen an dem Anschlussstück vorgesehenen Verbindungsflansch formschlüssig umgreifen oder in den Verbindungsflansch eingreifen. Auch hier sind eine Vielzahl von Bauteilen notwendig, und die Lösbarkeit kann für Verbindungen im Innenraum nicht zugelassen sein.

Hiervon ausgehend ist es Aufgabe der Erfindung, ein Verfahren zur dichtenden Verbindung zweier Endbereiche eines Kältekreises eines Klimagerätes, eine Leitungsverbindung für einen Kältekreis eines Klimagerätes und ein Klimagerät vorzuschlagen, die die geschilderten Probleme des Standes der Technik zumindest teilweise überwinden. Insbesondere soll ein einfaches und kostengünstig durchführbares Verfahren zur Herstellung einer Leitungsverbindung angegeben werden, wobei eine Leitungsverbindung hervorgebracht werden soll, die eine ausreichende Standfestigkeit gegenüber den im Kältekreis auftretenden hohen Drücken und erheblichen Temperaturschwankungen aufweist und ohne oder zusätzliche Bauteile herstellbar ist.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Verbindung eines ersten Endbereiches und eines zweiten Endbereiches einer Leitung eines Kältekreises eines Klimagerätes bei, umfassend zumindest die folgenden Schritte:
a) Umformen des ersten Endbereiches der Leitung zu einem inneren Verbindungsbereich, umfassend einem inneren Sicherungsbereich,
b) Umformen des zweiten Endbereiches der Leitung zu einem äußeren Verbindungsbereich, umfassend einem äußeren Sicherungsbereich,
c) Einführen des inneren Verbindungsbereiches in den äußeren Verbindungsbereich,
d) Formschlüssiges Verbinden des inneren Sicherungsbereiches des ersten Endbereichs und des äußeren Sicherungsbereiches des zweiten Endbereichs, so dass eine Bewegung des ersten Endbereiches relativ zu dem zweiten Endbereich in axialer Richtung blockiert ist.

Die Schritte a), b), c) und d) können bei einem regulären Verfahrensablauf mindestens einmal in der angegebenen Reihenfolge durchgeführt werden. Dabei erscheint auch möglich, die Schritte a) und b) parallel bzw. zeitgleich durchzuführen. Das Verfahren dient zur Herstellung einer Verbindung eines ersten und eines zweiten Endbereiches einer Leitung eines Kältekreises, wobei erster und zweiter Endbereich insbesondere ein (Leitungs-)Rohr oder ein Anschlussbereich einer Komponente des Kältekreises, beispielsweise eines Kompressors, sein können. Die Endbereiche können dabei insbesondere Endbereiche einer Leitung mit einem kreisrunden Querschnitt sein, wobei das Verfahren für eine Vielzahl von Querschnitten von Leitungen durchführbar ist. Zur Klarstellung wird angemerkt, dass die zwei Endbereiche einer Leitung auch als Endbereiche jeweils einer Leitung verstanden werden können, die zu einer Leitung verbunden werden.

Gemäß einem Schritt a) erfolgt ein Umformen des ersten Endbereiches der Leitung zu einem inneren Verbindungsbereich, umfassend einen inneren Sicherungsbereich. Die Bezeichnung "innere" soll insbesondere nur zum Ausdruck bringen, dass diese bei der Ausbildung einer Leitungsverbindung der erste Endbereich innenliegend positioniert ist, also radial nach innen den Verbindungsbereich und den Sicherungsbereich begrenzt. Bevorzugt grenzt der innere Verbindungsbereich unmittelbar am Ende der Leitung an, wobei der innere Sicherungsbereich bevorzugt an einem gegenüberliegenden Grenzbereich des Verbindungsbereichs ausgebildet ist. Das Umformen umfasst insbesondere ein (lokales) Einbringen einer Struktur, insbesondere einer in Umfangsrichtung umlaufenden Struktur und/oder das Einbringen mehreren solcher Strukturen. Das Umformen kann mit bekannten Verfahren zur Umformung von rohrförmigen Elementen, beispielsweise einem rollierenden Umformen, einem axialen Umformen (insbesondere einem Aufweiten, Reduzieren, Bördeln und/ oder Einbringen einer Sicke) oder einer Kombination von rollierendem und axialem Umformen erfolgen.

Gemäß einer vorteilhaften Ausgestaltung kann im Rahmen der Durchführung des Schrittes a) mindestens eine Aufnahme für eine Dichtung geformt und eine Dichtung in diese Aufnahme eingebracht werden. Die Aufnahme liegt insbesondere im inneren Verbindungsbereich. Bei einer Aufnahme kann es sich insbesondere um eine radial ausgerichtete Vertiefung (Sicke) als Dichtungssitz auf der Außenfläche des inneren Verbindungsbereiches handeln, in die eine, insbesondere als Dichtring, ausgebildete Dichtung eingelegt werden kann. Somit wird insbesondere eine außenliegende Dichtung vorgeschlagen.

Gemäß einer weiteren vorteilhaften Ausgestaltung können im Rahmen der Durchführung des Schrittes a) eine erste und eine zweite Aufnahme für eine Dichtung geformt werden, in die eine erste und eine zweite Dichtung eingebracht werden können. In vorteilhafter Weise kann so die erste Dichtung gegenüber dem transportierten Medium (Kältemittel) und die zweite Dichtung gegenüber der Umgebungsluft abschließen. Insbesondere können hierfür unterschiedliche Dichtungen mit geeigneten Eigenschaften für das Medium, mit dem sie in Kontakt kommen, vorgesehen sein.

Gemäß einer vorteilhaften Ausgestaltung kann im Rahmen der Durchführung des Schrittes a) der innere Sicherungsbereich im inneren Verbindungsbereich als ein radial auskragender Bereich (Steg) des inneren Verbindungsbereiches geformt werden, der vom Endbereich in Richtung Leitung gesehen, hinter der mindestens einen Aufnahme für eine Dichtung angeordnet sein kann, so dass der Sicherungsbereich den äußeren Abschluss der herzustellenden Leitungsverbindung bildet.

Gemäß einem Schritt b) kann ein Umformen des zweiten Endbereiches der Leitung zu einem äußeren Verbindungsbereich, umfassend einen äußeren Sicherungsbereich erfolgen. Die Bezeichnung "äußere" soll insbesondere nur zum Ausdruck bringen, dass bei der Ausbildung einer Leitungsverbindung der zweite Endbereich außenliegend positioniert ist, also radial nach außen den Verbindungsbereich und den Sicherungsbereich begrenzt. Bevorzugt grenzt der äußere Sicherungsbereich unmittelbar am Ende der Leitung an, wobei der äußere Verbindungsbereich sich ausgehend von dem äußeren Sicherungsbereich weiter (begrenzt) entlang der zweiten Leitung erstreckt. Das Umformen umfasst insbesondere ein (lokales) Einbringen einer Struktur, insbesondere einer in Umfangsrichtung umlaufenden Struktur und/oder das Einbringen mehrerer solcher Strukturen. Das Umformen kann mit bekannten Verfahren zur Umformung von rohrförmigen Elementen, beispielsweise einem rollierenden oder axialem Umformen, oder eine Kombination aus rollierendem oder axialem Umformen erfolgen.

Gemäß einer vorteilhaften Ausgestaltung kann bei der Durchführung des Schrittes b) beim Umformen des zweiten Endbereiches der Leitung zu einem äußeren Verbindungsbereich ein Dichtungsbereich geformt, insbesondere aufgeweitet, werden, wobei der Innendurchmesser des Dichtungsbereiches dazu geeignet ist, eine dichtende Verbindung mit der mindestens einen Dichtung in einer Aufnahme des inneren Verbindungsbereichs herzustellen.

Gemäß einer weiteren vorteilhaften Ausgestaltung kann im Rahmen der Durchführung des Schrittes b) der zu formende Sicherungsbereich einen größeren Innendurchmesser aufweisen als der Außendurchmesser des Sicherungsbereiches des inneren Verbindungsbereichs. Vorteilhaft kann dabei der Dichtungsbereich einen kleineren Innendurchmesser als der Sicherungsbereich aufweisen, sodass vom Endbereich in Richtung Rohr gesehen, der Sicherungsbereich vor dem Dichtungsbereich angeordnet sein kann.

Zur umformenden Herstellung von Sicherungsbereich und Dichtungsbereich kann der zweite Endbereich insbesondere aufgeweitet werden. Dies kann beispielsweise mittels rollierenden oder axialen Umformen oder einer Kombination von beidem erfolgen.

Gemäß einem Schritt c) kann ein Einführen des inneren Verbindungsbereiches in den äußeren Verbindungsbereich erfolgen. Nach Durchführung des Schrittes c) kann insbesondere die mindestens eine Dichtung in einer Aufnahme des inneren Verbindungsbereichs in dichtenden Kontakt mit einem Dichtungsbereich des äußeren Verbindungsbereichs gebracht sein und der Sicherungsbereich des äußeren Verbindungsbereichs den Sicherungsbereich des inneren Verbindungsbereichs überdecken.

Gemäß einem Schritt d) kann ein formschlüssiges Verbinden des inneren Sicherungsbereiches des ersten Endbereichs und des äußeren Sicherungsbereiches des zweiten Endbereichs erfolgen, wobei insbesondere innerer Sicherungsbereich und äußerer Sicherungsbereich derart ausgestaltet sind, dass die formschlüssige Verbindung eine Bewegung des ersten Endbereiches relativ zu dem zweiten Endbereich in axialer Richtung blockiert. Das formschlüssige Verbinden kann dabei insbesondere durch ein plastisches Anformen (auch als Pressen bezeichnet) des Sicherungsbereiches des äußeren Verbindungsbereiches an den Sicherungsbereich des inneren Verbindungsbereiches erfolgen. Durch das Anformen (Pressen) kann eine weitestgehend gasdichte formschlüssige Verbindung verwirklicht werden, die ein Vordringen von Sauerstoff zu der mindestens einen (zweiten) Dichtung zumindest einschränken kann und somit die Standzeit der Leitungsverbindung verlängern kann. Zudem kann die formschlüssige Verbindung die Leitungsverbindung auch ein Verkanten von innerem gegenüber äußerem Verbindungsbereich, beispielsweise bei einer mechanischen Beanspruchung, verhindern.

Nach einem weiteren Aspekt wird auch eine Leitungsverbindung für zwei Endbereiche einer Leitung eines Kältekreises vorgeschlagen, zumindest umfassend einen inneren Verbindungsbereich und einen äußeren Verbindungsbereich, wobei der innere Verbindungsbereich dazu eingerichtet ist, zumindest teilweise im äußeren Verbindungsbereich aufgenommen zu werden, und ein äußerer Sicherungsbereich des äußeren Verbindungsbereiches dazu eigerichtet ist, formschlüssig einen inneren Sicherungsbereich des inneren Verbindungsbereiches zu umschließen, so dass eine Bewegung in Richtung einer Achse der Leitungsverbindung verhindert wird, wobei äußerer Verbindungsbereich und innerer Verbindungsbereich umgeformte Endbereiche der Leitung sind.

Insbesondere wird eine Leitungsverbindung für zwei Endbereiche einer Leitung eines Kältekreises vorgeschlagen, zumindest umfassend einen inneren Verbindungsbereich und einen äußeren Verbindungsbereich, wobei der innere Verbindungsbereich teilweise im äußeren Verbindungsbereich aufgenommen ist, und ein äußerer Sicherungsbereich des äußeren Verbindungsbereiches formschlüssig einen inneren Sicherungsbereich des inneren Verbindungsbereiches umschließt, so dass eine Bewegung in Richtung einer Achse der Leitungsverbindung verhindert ist, wobei äußerer Verbindungsbereich und innerer Verbindungsbereich umgeformte Endbereiche der Leitung sind.

Gemäß einer vorteilhaften Ausgestaltung können der erste und der zweite Endbereich aus einem metallischen Werkstoff, insbesondere Kupfer, Messing, und/ oder Aluminium bestehen. Vorteilhaft kann so ein hier vorgestelltes Verfahren mit Endbereichen bekannter Rohre und Verbindungselemente für Kältekreise durchführbar sein.

Nach einem weiteren Aspekt wird auch ein Klimagerät vorgeschlagen mit mindestens einer hier angegebenen Leitungsverbindung. Bei dem Klimagerät kann es sich insbesondere um eine Klimaanlage oder eine Wärmepumpenanlage handeln.

Die im Zusammenhang mit dem Verfahren erörterten Details, Merkmale und vorteilhaften Ausgestaltungen können entsprechend auch bei der hier vorgestellten Leitungsverbindung und dem Klimagerät auftreten und umgekehrt. Insoweit wird auf die dortigen Ausführungen zur näheren Charakterisierung der Merkmale vollumfänglich Bezug genommen.

Hier werden somit ein Verfahren zur dichtenden Verbindung zweier Endbereiche eines Kältekreises, eine Leitungsverbindung für einen Kältekreis eines Klimagerätes und ein Klimagerät angegeben, welche die mit Bezug auf den Stand der Technik geschilderten Probleme zumindest teilweise lösen. Insbesondere tragen das Verfahren, die Leitungsverbindung sowie das Klimagerät zumindest dazu bei, eine dauerhafte und sichere Leitungsverbindung für einen Kältekreis eines Klimagerätes anzugeben, die einfach und ohne zusätzliche Bauelemente mittels Umformverfahren herstellbar ist.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Ablauf eines hier vorgestellten Verfahrens, und

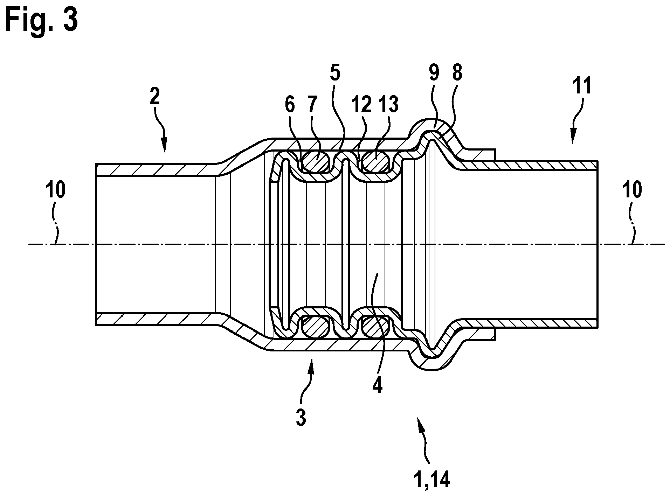

- Fig. 2 und 3:: eine hier vorgestellte Leitungsverbindung.

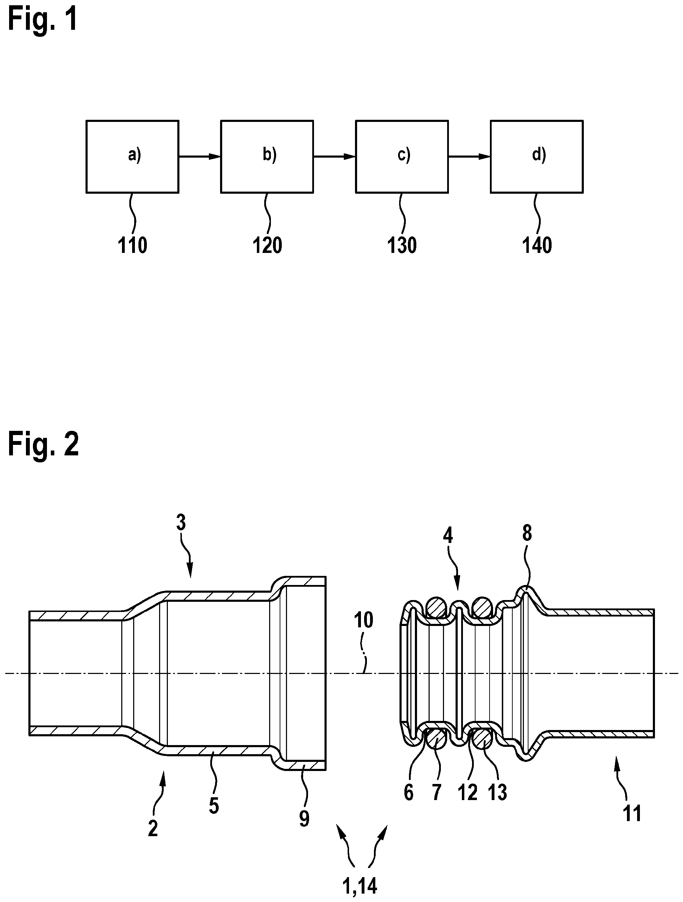

Fig. 1 zeigt beispielhaft und schematisch einen Ablauf eines hier vorgeschlagenen Verfahrens. Das Verfahren dient dem Herstellen einer Leitungsverbindung 1 von einem ersten Endbereich 2 und einem zweiten Endbereich 11 einer Leitung (14) eines Kältekreises eines Klimagerätes. Die mit den Blöcken 110,120, 130 und 140 dargestellte Reihenfolge der Schritte a), b), c) und d) kann sich bei einem regulären Betriebsablauf einstellen.

Fig. 2 zeigt beispielhaft und schematisch eine Leitungsverbindung 1 vor der Durchführung des Schrittes c). Der erste und der zweite Endbereich 2,11 der Leitung 14 des Kältekreises können dabei auch rohrförmige Verbindungselemente von Komponenten des Kältekreises, beispielsweise eines Kompressors, sein und eine gemeinsame Achse 10 aufweisen.

In Block 110 kann gemäß Schritt a) ein Umformen des ersten Endbereiches 2 der Leitung 14 zu einem inneren Verbindungsbereich 4, umfassend einen inneren Sicherungsbereich 8, erfolgen. Dabei kann einer erste Aufnahme 6 für eine erste Dichtung 7 und eine zweite Aufnahme 12 für eine zweite Dichtung 13 geformt werden, wobei die Dichtungen 7, 13 als Dichtringe, auch als O-Ringe bezeichnet, ausgebildet sein können. Die auf einer Außenfläche des inneren Verbindungsbereiches 4 liegenden Dichtungen 7, 13 sind somit außenliegende Dichtungen 7, 13. Zudem kann ein innerer Sicherungsbereich 8 geformt werden, der als radiale Erhöhung bzw. Steg ausgebildet sein kann.

In Block 120 kann gemäß Schritt b) ein Umformen des zweiten Endbereiches 11 der Leitung 14 zu einem äußeren Verbindungsbereich 3 umfassend einem äußeren Sicherungsbereich 9, erfolgen. Der äußere Verbindungsbereich 3 kann dabei insbesondere aufgeweitet werden. Dabei kann ein Dichtungsbereich 5 ausgebildet werden, der einen Durchmesser aufweist, der ein dichtendes Umschließen der Dichtungen 7, 13 ermöglicht. Am axialen Ende des äußeren Verbindungsbereiches 3 kann ein äußerer Sicherungsbereich 9 angeordnet sein, der einen Durchmesser aufweisen kann, der ein Umschließen des inneren Sicherungsbereiches 8 des inneren Verbindungsbereiches 4 ermöglicht.

In Block 130 kann gemäß Schritt c) ein Einführen des inneren Verbindungsbereiches 4 in den äußeren Verbindungsbereich 3 erfolgen. Dabei können die Dichtungen 7, 13 in den Aufnahmen 6, 12 des inneren Verbindungsbereiches 4 in dichtenden Kontakt mit dem Dichtungsbereich 5 des äußeren Verbindungsbereiches 3 gebracht werden und der äußere Sicherungsbereich 9 des äußeren Verbindungsbereiches 3 kann den inneren Sicherungsbereich 8 des inneren Verbindungsbereiches 4 umschließen bzw. überdecken.

In Block 140 kann gemäß Schritt d) ein formschlüssiges Verbinden des inneren Sicherungsbereiches 8 des ersten Endbereichs 2 und des äußeren Sicherungsbereiches 9 des zweiten Endbereichs 11 erfolgen. Innerer Sicherungsbereich 8 und äußerer Sicherungsbereich 9 können hierfür derart ausgestaltet sind, dass die formschlüssige Verbindung eine Bewegung des ersten Endbereiches 2 relativ zu dem zweiten Endbereich 11 in axialer Richtung 10 blockiert. Hierzu kann beispielsweise eine manuell, elektrisch oder pneumatisch angetriebene Presszange eingesetzt werden. Durch ein plastisches Anformen (Pressen) des äußeren Sicherungsbereiches 9 des äußeren Verbindungsbereiches 3 an den inneren Sicherungsbereich 8 des inneren Verbindungsbereiches 4 kann die Leitungsverbindung 1 in axialer Richtung gesichert und ein Lösen verhindert werden. Um die Leitungsverbindung 1 zu lösen, müsste die plastische Verformung des äußeren Sicherungsbereiches 9 gelöst bzw. geöffnet werden und somit erfüllt eine hier vorgeschlagene Leitungsverbindung 1 das Erfordernis einer nicht zerstörungsfrei lösbaren Leitungsverbindung 1. Zudem kann durch die formschlüssige Verbindung von äußerem und innerem Sicherungsbereich 8,9 der Eintrag von Sauerstoff insbesondere zur zweiten Dichtung 13 gemindert werden, womit vorteilhaft eine Erhöhung der Standzeit der Leitungsverbindung 1 einhergehen kann.

### Bezugszeichenliste

- 1: Leitungsverbindung
- 2: erster Endbereich
- 3: äußerer Verbindungsbereich
- 4: innerer Verbindungsbereich
- 5: Dichtungsbereich
- 6: erste Aufnahme
- 7: erste Dichtung
- 8: innerer Sicherungsbereich
- 9: äußerer Sicherungsbereich
- 10: Achse
- 11: zweiter Endbereich
- 12: zweite Aufnahme
- 13: zweite Dichtung
- 14: Leitung

## Patentansprüche

1. Verfahren zur Verbindung eines ersten Endbereiches (2) und eines zweiten Endbereiches (11) einer Leitung (14) eines Kältekreises eines Klimagerätes, umfassend zumindest die folgenden Schritte:
a) Umformen des ersten Endbereiches (2) der Leitung (14) zu einem inneren Verbindungsbereich (4), umfassend einen inneren Sicherungsbereich (8),
b) Umformen des zweiten Endbereiches (11) der Leitung (14) zu einem äußeren Verbindungsbereich (3), umfassend einen äußeren Sicherungsbereich (9),
c) Einführen des inneren Verbindungsbereiches (4) in den äußeren Verbindungsbereich (3),
d) Formschlüssiges Verbinden des inneren Sicherungsbereiches (8) des ersten Endbereichs (2) und des äußeren Sicherungsbereiches (9) des zweiten Endbereichs (11), so dass eine Bewegung des ersten Endbereiches (2) relativ zu dem zweiten Endbereich (11) in axialer Richtung (10) blockiert ist.

2. Verfahren nach Anspruch 1, wobei in Schritt a) mindestens eine Aufnahme (6, 12) für eine Dichtung (7, 13) geformt wird und jeweils eine Dichtung (7, 13) in die mindestens eine Aufnahme (6, 12) eingebracht wird.

3. Verfahren nach Anspruch 2, wobei zwei axial beabstandete Aufnahmen (6,12) für jeweils eine Dichtung (7, 12) geformt werden.

4. Verfahren nach Anspruch 2 oder 3, wobei in Schritt b) im äußere Verbindungsbereich (3) ein Dichtungsbereich (5) geformt wird, so dass bei der Durchführung des Schrittes c) eine dichtende Verbindung des Dichtungsbereichs (5) zu mindestens einer Dichtung (7, 13) in mindestens einer Aufnahme (6, 12) hergestellt wird.

5. Verfahren, nach einem der vorangehenden Ansprüche, wobei in Schritt a) als innerer Sicherungsbereich (8) des inneren Verbindungsbereiches (4) ein radial auskragender Sicherungsbereich (8) geformt wird und in Schritt b) als äußerer Sicherungsbereich (9) des äußeren Verbindungsbereiches (3) der zweite Endbereich (11) aufgeweitet wird, so dass nach Durchführung des Schrittes c) der äußere Sicherungsbereich (9) des äußeren Verbindungsbereiches (3) den inneren Sicherungsbereich (8) des inneren Verbindungsbereiches (4) umschließt.

6. Verfahren nach einem der Ansprüche 3 bis 5, wobei bei der Durchführung des Schrittes a) die erste Aufnahme (6) und zweite Aufnahme (12) und/ oder der innere Sicherungsbereich (8) durch axiales oder rollierendes Umformen oder einer Kombination von axialem und rollierendem Umformen gebildet werden.

7. Leitungsverbindung (1) für zwei Endbereiche (2, 11) einer Leitung (14) eines Kältekreises, zumindest umfassend einen inneren Verbindungsbereich (4) und einen äußeren Verbindungsbereich (3), wobei der innere Verbindungsbereich (4) dazu eingerichtet ist, zumindest teilweise im äußeren Verbindungsbereich (3) aufgenommen zu werden, und ein äußerer Sicherungsbereich (9) des äußeren Verbindungsbereiches (3) dazu eigerichtet ist, formschlüssig einen inneren Sicherungsbereich (8) des inneren Verbindungsbereiches (4) zu umschließen, so dass eine Bewegung in Richtung einer Achse (10) der Leitungsverbindung (1) verhindert wird, wobei äußerer Verbindungsbereich (3) und innerer Verbindungsbereich (4) umgeformte Endbereiche (2, 11) der Leitung (14) sind.

8. Leitungsverbindung (1) nach Anspruch 7, wobei erster und zweiter Endbereich (2,11) aus Kupfer, Messing, Edelstahl und/ oder Aluminium bestehen.

9. Klimagerät, zumindest aufweisend eine Leitungsverbindung (1) nach Anspruch 7 oder 8.
